# FASCICULE DE BREVET EUROPEEN

(11) **EP 4 253 032 B1**
(45) Date de publication et mention de la délivrance du brevet: **15.05.2024**
(21) Numéro de dépôt: 23164529.2
(22) Date de dépôt: 28.03.2023
(51) Int. Cl.: B32B 3/12, B32B 3/16, B32B 3/26, B32B 5/06, B32B 5/26, B32B 7/12, B32B 27/08, B32B 27/12, B32B 27/18, B32B 27/28, B32B 27/32, B32B 27/34, B32B 27/38, B32B 27/42

(54) **PANNEAU SANDWICH A ALVEOLES CONTENANT DE LA POUDRE DE NITRURE DE BORE ET PROCEDE DE FABRICATION DUDIT PANNEAU**
BORONITRIDPULVER ENTHALTENDE SANDWICHPLATTE UND VERFAHREN ZU DEREN HERSTELLUNG
HONEYCOMB SANDWICH PANEL CONTAINING BORON NITRIDE POWDER AND METHOD OF MAKING SAME

(30) Priorité: 30.03.2022 FR 2202848
(43) Date de publication de la demande: 04.10.2023
(73) Titulaire: AIRBUS OPERATIONS (S.A.S.), 31060 Toulouse (FR)
(72) Inventeur: BROCHARD, Wolfgang, 31060 TOULOUSE (FR); BLANC, Jonathan, 31060 TOULOUSE (FR)
(74) Mandataire: Airbus-OPS SAS

(56) Documents cités:
- WO-A1-2016/181073
- WO-A2-2021/034490
- US-A- 4 598 007

## Description

La présente invention concerne les panneaux sandwichs d'un aéronef et notamment ceux disposés dans les ensembles propulsifs. Un exemple de tel panneau peut être trouvé dans la demande de brevet WO2016/181073 A1.

De manière classique, des panneaux sandwichs sont installés dans diverses zones d'un aéronef notamment pour réduire le rayonnement acoustique et par exemple dans les panneaux d'habillage de la cabine ou encore les ensembles propulsifs pris à titre illustratif dans la présente description. Une nacelle de turboréacteur d'aéronef comprend de l'avant vers l'arrière, un premier tronçon en amont dans la direction du flux aérodynamique traversant la nacelle de l'aéronef en vol, appelé entrée d'air, un deuxième tronçon qui recouvre le carter de la soufflante moteur, appelé capot de soufflante, et un troisième tronçon au niveau duquel se trouve généralement une zone d'inversion de poussée qui entoure le corps de la turbine du moteur à l'aval dans la direction du flux aérodynamique. La zone d'inversion de poussée, dite TRU pour « Thrust Reverser Unit » en anglais présente généralement une structure externe, dite OFS pour « Outer Fixed Structure » en anglais, appelé ci-après structure fixe externe, qui définit avec une structure interne concentrique dite IFS pour « Inner Fixed Structure » en anglais, appelé ci-après structure fixe interne, une veine annulaire servant à canaliser le flux d'air froid.

La structure fixe interne comprend un panneau sandwich permettant de tenir les efforts structuraux. Le panneau sandwich facilite le transfert thermique de l'intérieur vers l'extérieur et peut également présenter une fonction acoustique. Pour ce faire, un tel panneau comporte une structure intercalant un véhicule de transfert thermique sous forme d'une âme alvéolaire constituée d'aluminium ou de titane entre deux peaux. Très souvent, ce panneau comprend la superposition d'une première peau extérieure aérodynamique faite de matériau composite et d'une deuxième peau intérieure de support également en matériau composite entre lesquelles se trouve une âme en matériau en nid d'abeille fait de métal (aluminium ou titane). L'aluminium ou le titane permettent de réduire la résistance thermique par rapport à d'autres matériaux présentant des renforts en verre, carbone ou aramide et de permettre un meilleur transfert d'énergie thermique. Cependant il présente aussi des désavantages comme d'être sujet à des problèmes de corrosion ou d'être plus lourd que d'autres matériaux de type par exemple aramide. Le poids du panneau sandwich s'en trouve largement accru.

La présente invention vise à proposer un panneau sandwich pour aéronef et dans l'exemple illustré pour structure interne fixe de nacelle d'aéronef permettant de pallier aux problèmes de corrosion liés à la présence de matériaux en nid d'abeille en aluminium et d'alléger sa structure vis-à-vis des matériaux en nid d'abeille métallique.

A cet effet, la présente invention concerne un panneau sandwich d'aéronef comprenant une première peau et une deuxième peau entre lesquelles se trouve une âme alvéolaire comportant des alvéoles débouchant de part et d'autre respectivement sur la première peau et sur la deuxième peau, les alvéoles étant séparées les unes des autres par des parois latérales caractérisé en ce que les parois latérales de l'âme comprennent un renfort à base de fibres aramide, carbone ou verre, une résine de renfort polymère et de la poudre de nitrure de bore.

L'invention propose ainsi une alternative au panneau sandwich d'aéronef présentant une âme en aluminium pour éviter les problèmes de corrosion et de masse et offrir ainsi une structure plus légère garantissant un bon transfert thermique d'une face à l'autre du panneau.

L'invention prévoit au moins l'une des caractéristiques optionnelles suivantes, prises isolément ou en combinaison.

La résine de renfort comprend de la poudre de nitrure de bore.

Une résine de collage utilisée dans la fabrication de l'âme alvéolaire pour coller des voiles de renfort les uns sur les autres comprend de la poudre de nitrure de bore.

Des films adhésifs entre les peaux et l'âme contiennent de la poudre de nitrure de bore.

Les alvéoles pour au moins une partie de celles-ci sont remplies au moins partiellement d'un matériau de remplissage contenant de la poudre de nitrure de bore.

La poudre de nitrure de bore est une poudre de nitrure de bore hexagonale.

Le renfort est réalisé à partir de fibres méta-aramide.

Une peau est perforée.

L'invention se rapporte également à un ensemble propulsif comprenant une nacelle présentant une structure fixe interne caractérisé en ce que la structure fixe interne comprend un panneau sandwich présentant l'une ou plusieurs des caractéristiques précédentes.

L'invention se rapporte également à un aéronef caractérisé en ce qu'il comprend une partie munie d'un panneau sandwich présentant l'une ou plusieurs des caractéristiques précédentes.

L'invention se rapporte également au procédé de fabrication d'un tel panneau sandwich. Le procédé de fabrication du panneau sandwich est caractérisé en ce qu'il comprend les étapes suivantes : - empilement de voiles de renfort à base de fibres aramide, carbone ou verre de manière à être associées les unes aux autres pour former un bloc présentant des alvéoles ; - introduction d'une poudre de nitrure de bore dans au moins une partie des parois latérales desdites alvéoles comprenant une résine de renfort - découpe d'âme à la dimension souhaitée.

Les étapes peuvent être réalisées dans cet ordre ou un ordre différent, la poudre de nitrure de bore pouvant être intégrée au renfort avant ou après l'empilement de voiles.

L'invention prévoit au moins l'une des caractéristiques optionnelles suivantes, prises isolément ou en combinaison.

La poudre de nitrure de bore est mélangée à la résine de renfort polymère avant d'être déposé sur le renfort en plongeant le bloc dans un bain de résine de renfort.

La poudre de nitrure de bore est mélangée à une résine de collage appliquée en lignes parallèles sur lesdits voiles de renfort pour les fixer les uns aux autres pour former le bloc par expansion.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue en perspective d'un aéronef pourvu d'un ensemble propulsif muni d'une nacelle comprenant un panneau sandwich selon la présente l'invention ;
[Fig. 2] est une vue en perspective éclatée d'une nacelle et d'un mat susceptible de comprendre un panneau sandwich selon la présente invention ;
[Fig. 3] est une vue schématique illustrant le transfert thermique dans l'ensemble propulsif au niveau du panneau sandwich installé autour du moteur ;
[Fig. 4] est une vue partielle en perspective d'un panneau sandwich selon la présente invention ;
[Fig. 5] est une vue partielle en perspective d'une âme alvéolaire d'un panneau sandwich selon la figure 4 ;
[Fig. 6] est une vue en coupe schématique partielle d'un panneau sandwich selon la présente invention selon un plan P représenté sur la figure 4 parallèle à la direction longitudinale des conduits de l'âme alvéolaire et passant par deux parois latérale séparant trois alvéoles de l'âme ;
[Fig. 7] est une vue en coupe schématique partielle d'un panneau sandwich selon la présente invention selon un plan P représenté sur la figure 4 parallèle à la direction longitudinale des conduits de l'âme alvéolaire et passant par deux parois latérale séparant trois alvéoles de l'âme dans laquelle une partie des alvéoles sont remplis d'un matériau de remplissage ;
[Fig. 8] est une vue schématique d'étapes d'un premier mode de fabrication d'une âme alvéolaire d'un panneau sandwich selon la présente invention ;
[Fig. 9] est une vue schématique des étapes suivantes du premier mode de fabrication d'une âme alvéolaire d'un panneau sandwich illustré sur la figure 8 ;
[Fig. 10] est une vue schématique d'étapes d'un deuxième mode de fabrication du procédé de fabrication d'une âme alvéolaire d'un panneau sandwich selon la présente invention.

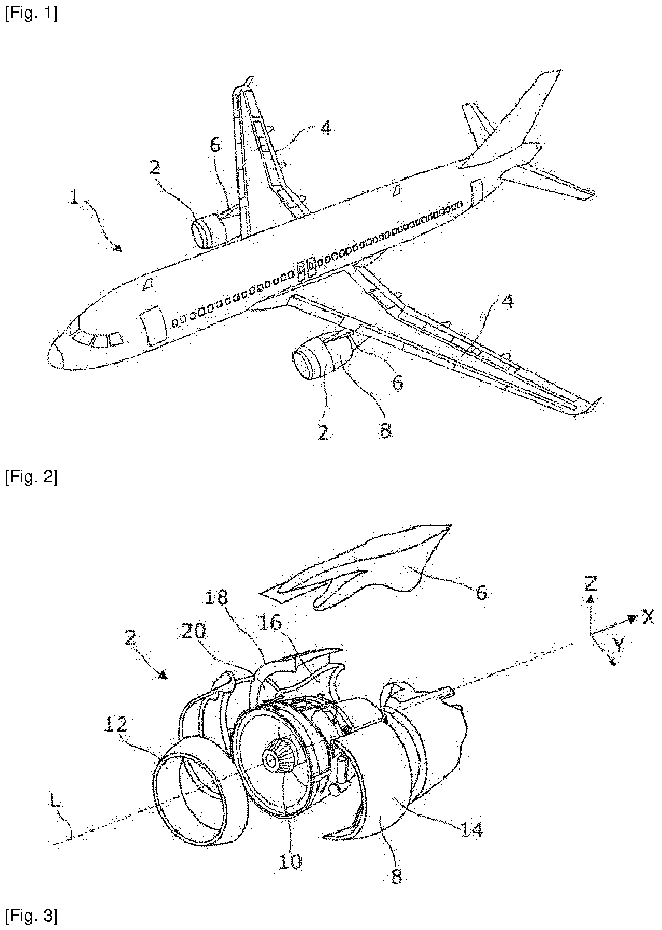

La figure 1 représente un aéronef 1 comprenant un ensemble propulsif 2. Dans la forme de réalisation illustrée, l'ensemble propulsif 2 est rattaché à la voilure 4 par un mat 6. L'ensemble propulsif 2 est un dispositif permettant de générer une poussée qui constitue la force motrice de l'aéronef 1. Comme l'illustre la figure 2, l'ensemble propulsif comporte une nacelle 8 entourant un moteur 10 tel qu'un turboréacteur présentant les mêmes trois tronçons décrits plus haut. Sur la figure 2, sont représentés l'entrée d'air 12, le capot de soufflante 14, la structure fixe interne 16, la structure fixe externe 18 et la veine annulaire 20 servant à canaliser l'air froid. La nacelle 8 s'étend autour d'un axe longitudinal appelé axe L orienté dans une direction longitudinale X. La direction Y correspond à la direction orientée transversalement par rapport à la nacelle 8. La direction Z correspond à la direction verticale ou hauteur lorsque l'aéronef est posé au sol. Les trois directions X, Y et Z sont orthogonales entre elles. Dans la suite de la description, les termes « avant » et « arrière », « amont » et « aval » se comprennent selon la direction du flux d'air dans l'ensemble propulsif en fonctionnement, soit dans la direction et le sens de l'axe X sur la figure 2. L'air rentre par l'avant de l'ensemble propulsif, c'est-à-dire par l'entrée d'air 12 de la nacelle et ressort par l'arrière de celui-ci.

Comme représenté sur la figure 3, la présente invention concerne un panneau 22 sandwich à âme 24 alvéolaire utilisé dans les structures 16 fixes internes des ensembles propulsifs d'aéronef pour permettre un transfert thermique par conduction dans une direction radiale, représenté par une flèche F sur la figure 3, depuis le moteur 10 autour duquel les températures peuvent avoisiner entre 300 et 500 degrés Celsius vers la veine annulaire 20 convoyant de l'air froid. Au vu des températures élevées autour du moteur, une couche 25 de protection thermique garantit l'intégrité thermique du panneau 22 sandwich.

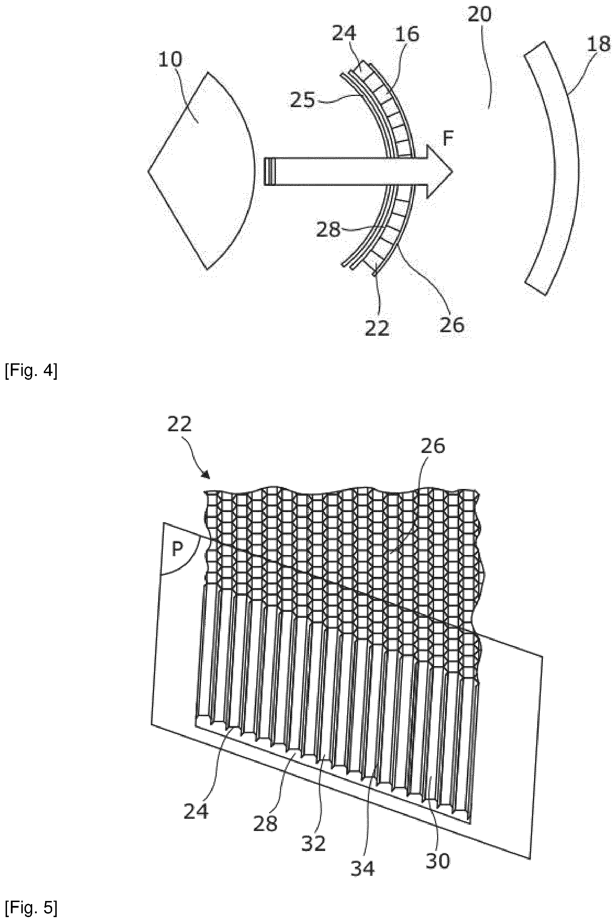

Comme illustré sur la figure 4, le panneau 22 sandwich comporte deux peaux 26, 28 entre lesquelles est intercalée l'âme alvéolaire 24. Le panneau 22 comprend une première peau 26 faisant face dans la direction radiale à la structure fixe externe 18, une deuxième peau 28 de support ayant essentiellement pour fonction d'assurer la tenue structurale du panneau 22 faisant face dans la direction radiale au corps du moteur 10 et l'âme 24 alvéolaire de part et d'autre de laquelle sont fixées la première et la deuxième peau 26, 28. Selon une forme possible de l'invention, la deuxième peau 28 exposée au bruit à savoir dans le cas illustré celle face au moteur est perforée de manière que le panneau sandwich puisse offrir une fonction acoustique. Selon la forme illustrée sur les figures 4 et 5, l'âme 24 alvéolaire comprend des conduits 30 débouchant de part et d'autre respectivement sur la première peau 26 et sur la deuxième peau 28. La première peau 26 et la deuxième peau 28 obturent les conduits 30 pour former les alvéoles 32 de l'âme 24. Les conduits 30 sont séparés les uns des autres par des parois 34 latérales. Une paroi 34 latérale sépare une alvéole 32A de l'alvéole adjacente 32B. Selon une forme particulière telle que celle représentée sur les figures 4 et 5, l'âme 24 alvéolaire se présente sous forme de nid d'abeille à savoir avec des alvéoles 32 formées de conduits 30 de section hexagonale. Toute autre forme de conduit est possible. La géométrie des alvéoles n'est pas limitée à celle illustrée. Le matériau d'âme peut comporter des alvéoles de forme quelconque. Dans l'exemple illustré, les peaux 26, 28 sont faites de matériau composite tel qu'un polymère renforcé de fibres de carbone ou PRFC (CFRP en anglais pour Carbon Fiber Reinforced Polymer). Selon des variantes, les fibres utilisées peuvent être des fibres de verre ou d'aramide.

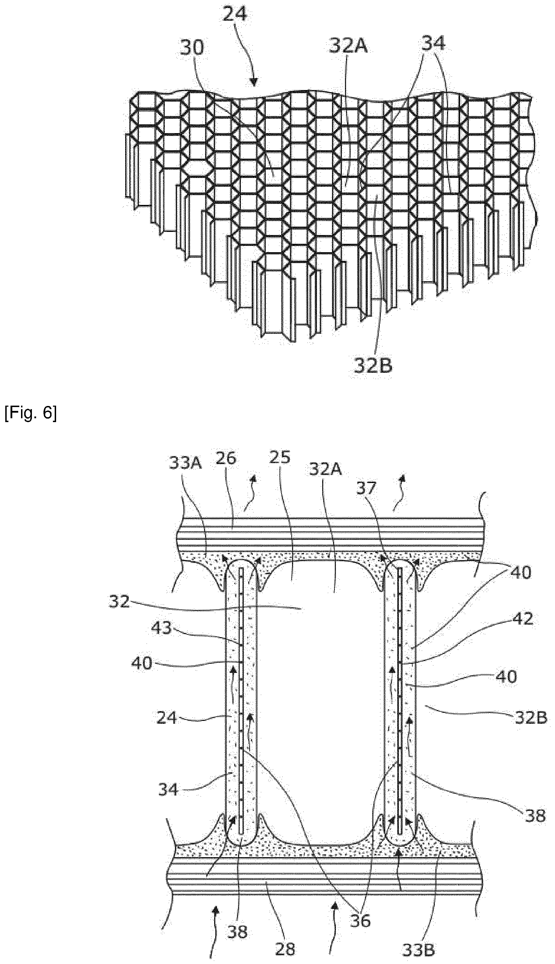

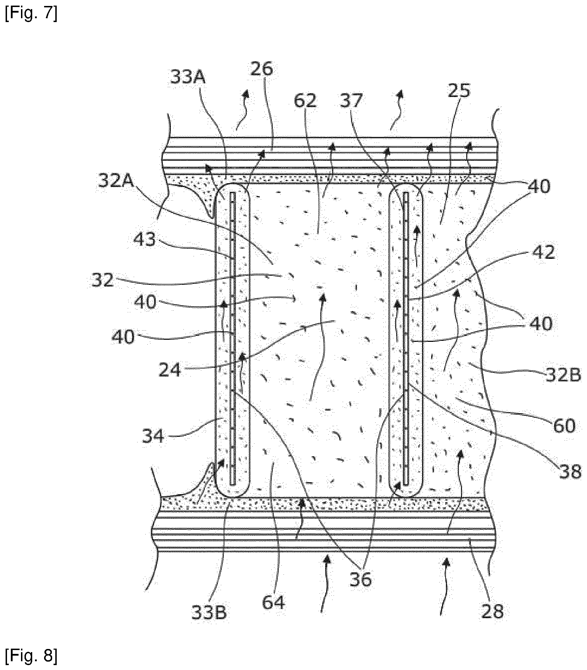

Comme représentés sur les figures 6 et 7, un premier film 33A adhésif est interposé entre l'âme 24 et la première peau 26 et un deuxième film 33B entre l'âme 24 et la deuxième peau 28. Les films 33A et 33B sont réalisés à base de résine polymère comme les résines thermoplastiques, thermodurcissables (par exemple époxy, phénolique) ou autre.

Selon la présente invention, l'âme 24 alvéolaire comprend des renforts 36 à base de fibres sous forme de papiers, fibres tissées, unidirectionnelles, pluridirectionnelles, continues, discontinues ou autres. Le renfort 36 dans l'exemple illustré est un papier 37 réalisé à partir de fibres aramides, dit papier aramide, et par exemple de fibres méta-aramides telles que du NOMEX (marque déposée). Le renfort est combiné à une résine 38, appelée dans ce qui suit résine 38 de renfort. Dans l'exemple du papier, le papier 37 est recouvert d'une résine 38 polymère résistante à la chaleur. Dans le cas de fibres, celles-ci sont incorporées et mélangées à la résine 38. La résine est une résine thermoplastique ou thermodurcissable telle qu'une résine phénolique, une résine epoxy ou encore par exemple une résine PEI (photopolymérisable), PAI (polyamide-imide), PA (polyamide aliphatique), PP (polypropylène), PEEK (polyétheréthercétone), PEKK (polyethercetonecetone), BMI (polybismaléimides). Au moins une partie et dans la forme illustrée l'ensemble des parois 34 latérales des alvéoles 32 de l'âme 24 comprennent de la poudre 40 de nitrure de bore représentée par des points sur les figures 6 et 7. La poudre de nitrure de bore 40 est dans l'exemple illustrée une poudre de nitrure de bore hexagonale (Boron Nitride hexagonal powder en langue anglosaxonne). Les matériaux utilisés pour constituer l'âme 24 permettent d'éviter tout problème de corrosion ; la poudre de nitrure de bore hexagonale 40 permet de réduire la résistance thermique en améliorant la conductivité et donc le transfert de chaleur. Enfin l'âme 24 alvéolaire est plus légère qu'une âme en matériau métallique. La chaleur représentée par de petites flèches sur les figures 6 et 7 est transférée par les parois latérales. Plus précisément la poudre de nitrure de bore hexagonale 40 est introduite dans la résine 38 de renfort.

Dans certaines formes de réalisation, une colle 42 sous forme par exemple de résine 43 (comme de la résine phénolique, époxy ou autre) est utilisée pour figer et maintenir le renfort 36 qui se trouve être dans la forme illustrée sous forme de feuille de papier 37 aramide. Une résine pour les feuilles de papier aramide est par exemple la résine phénolique. Les feuilles de papier sont collées entre elles afin de former l'âme alvéolaire comme il sera vu plus loin. La résine 43 sera appelée résine de collage pour la différencier de la résine 38 de renfort. Dans ces formes de réalisation utilisant de la résine 43 de collage, la poudre de nitrure de bore hexagonale 40 peut être introduite dans la résine 43 de collage comme illustré sur les figures 6 et 7. La poudre de nitrure de bore hexagonale peut dont être introduite dans la résine 43 de collage et/ou la résine 38 de renfort. La résine 38 de renfort et/ou la résine 43 de collage imprégnée(s) de poudre de nitrure de bore hexagonale sont les véhicules principaux du flux de transfert thermique au travers du panneau sandwich 22. La poudre de nitrure de bore hexagonale 40 par ces propriétés améliore la conductivité thermique de la résine 38 de renfort et/ou de la résine 43 de collage pour permettre à l'âme 24 à base de fibres aramides d'être aussi intéressante en terme de transfert de chaleur qu'une âme en aluminium toute en offrant une structure d'âme alvéolaire plus légère. Selon une forme de réalisation, la quantité de poudre de nitrure de bore hexagonale dans la résine atteint entre 0,01% et 20% de la masse ou du volume de résine.

Comme montré sur la figure 7, au moins une partie des alvéoles 32 est au moins partiellement remplie à l'aide d'un matériau 62 de remplissage. Le matériau peut être un mastic, une résine ou autre. Le remplissage au moins partiel apporte un renforcement structurel local. Dans la forme illustrée, le matériau est une résine 64 dite de remplissage pour la distinguer des autres résines décrites plus haut. Selon une forme de réalisation de l'innovation, la poudre de nitrure de bore 40 est introduite dans le matériau 62 de remplissage et par exemple dans la résine 64 de remplissage.

Le procédé de fabrication du panneau 22 sandwich va être décrit dans ce qui suit en référence aux figures 8 à 10. Le procédé de fabrication du panneau 22 comprend dans un premier temps la fabrication de l'âme alvéolaire 24. Plusieurs modes de réalisation de l'âme sont envisageables et en voici quelques exemples.

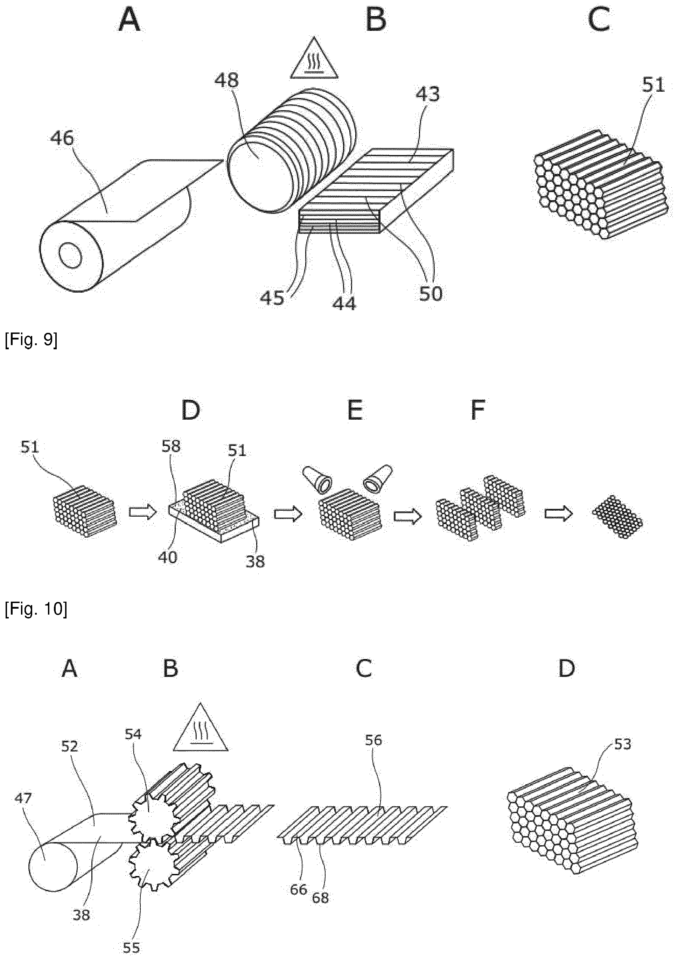

Selon un premier mode de fabrication illustré sur les figures 8 et 9, le procédé consiste à fabriquer la structure par expansion de couches 44 de même forme et dimension empilées les unes sur les autres et fixées les unes aux autres. Dans une première étape désignée par la référence A sur la figure 8, un rouleau 46 de renfort sans résine (ici un papier) est déroulé sous une machine 48 qui dépose de la résine 43 de collage en lignes 50 parallèles entre elles. Dans une étape B, le rouleau 46 sur lequel sont déposées ces lignes 50 est découpé en voiles 45 de renfort (ici en feuilles de papier) de même forme et dimension. Les voiles 45 sont empilées les uns sur les autres et se trouvent collés ensemble par les lignes 50 de résine 43 de collage. Dans une étape C, l'ensemble formé est étiré pour obtenir un bloc 51 avec la structure souhaitée de l'âme alvéolaire. La figure 9 représente la suite des traitements appliqués au bloc 51. L'étape D suivante consiste à plonger le bloc 51 dans un bain 58 de résine 38 de renfort. Dans la forme de réalisation illustrée en exemple, la résine 38 de renfort polymère choisie est la résine phénolique. La résine 38 de renfort contient de la poudre de nitrure de bore hexagonale 40. Lorsque le bloc 51 ressort du bain 58, les parois latérales 34 sont imprégnées de résine 38 de renfort et de poudre de nitrure de bore hexagonale 40. L'étape E suivante consiste à polymériser la résine 38 du bloc 51 enduit par tout type de moyen connu. Un moyen possible peut par exemple être un autoclave présentant une enceinte permettant la cuisson en question. Dans une dernière étape F, le bloc 51 est découpé à la dimension souhaitée pour la hauteur des conduits 30 de l'âme 24.

Selon une première variante, de la poudre de nitrure de bore hexagonale 40 est introduite dans la résine 43 de collage. Ainsi les parois latérales 34 de l'âme alvéolaire 24 du bloc 51 contiennent une quantité plus importante de poudre de nitrure de bore hexagonale 40, celle-ci étant déjà contenue dans la résine 38 de renfort. Selon la deuxième variante, la poudre de nitrure de bore hexagonale 40 n'est pas introduite dans la résine 43.

Un deuxième mode de réalisation illustré sur la figure 10 consiste dans une première étape A à dérouler un rouleau 47 de renfort 52 spécifique dit complexe car au niveau duquel une résine 38 de renfort est déjà intégrée. Dans cet exemple, le renfort complexe intègre une résine 38 de renfort. Le procédé comporte une étape consistant à déformer le renfort 52 complexe par pressage pour qu'il présente une succession de bosses 66 et de creux 68 dont la forme est choisie en fonction de la forme de l'alvéole souhaitée. Pour des alvéoles cylindriques de section circulaire, le renfort 52 complexe ressort ondulé. Selon la forme illustrée, le procédé consiste à dérouler le rouleau 47 de renfort 52 complexe pour le faire passer entre deux presses 54 et 55 crénelés afin d'imprimer une forme de semi-alvéole de section semi-hexagonale au renfort. Selon une étape C, le renfort 52 est découpé en voiles 56, marqués de l'empreinte de la presse, de même forme et dimension. Selon une étape D, les voiles 56 sont empilés les uns sur les autres les reliefs les plus hauts d'un voile contre les reliefs les plus hauts d'un voile adjacent pour obtenir un bloc 53 avec la structure souhaitée de l'âme alvéolaire. Les voiles sont assemblés entre eux par soudage thermique, collage ou tout autre procédé de type connu.

D'autres modes de fabrication du bloc 51, 53 sont possibles.

Comme indiqué en référence à la figure 7, au moins une partie des alvéoles 32 est au moins partiellement rempli à l'aide d'un matériau 62 de remplissage. Selon une forme de réalisation de l'innovation, la poudre de nitrure de bore est introduite dans le matériau 62 de remplissage et par exemple dans la résine 64 de remplissage.

Comme illustré sur les figures 6 et 7, de la poudre de nitrure de bore hexagonale 40 est introduite dans les films 33A et 33B permettant la fixation des peaux 26, 28 sur l'âme alvéolaire 24.

Suivant les différentes combinaisons possibles des variantes exposées ci-dessus, la poudre de nitrure de bore hexagonale 40 se trouve dans la résine 38 de renfort et/ou dans la résine 43 de collage. Selon une forme de réalisation, la poudre de nitrure de bore 40 est mélangée à la résine 38 de renfort et/ou à la résine 43 de collage avant d'être appliquée sur le renfort. La poudre de nitrure de bore peut également être introduite dans les films 33A, 33B adhésifs intercalés entre les peaux 26, 28 et l'âme 24 alvéolaire et/ou dans le matériau 62 de remplissage des alvéoles 32 de l'âme.

## Revendications

1. Panneau sandwich (22) d'aéronef comprenant une première peau (26) et une deuxième peau (28) entre lesquelles se trouve une âme alvéolaire (24) comportant des alvéoles (32) débouchant de part et d'autre respectivement sur la première peau (26) et sur la deuxième peau (28), les alvéoles étant séparées les unes des autres par des parois latérales (34) **caractérisé en ce que** les parois latérales (34) de l'âme (24) comprennent un renfort (37) à base de fibres aramide, carbone ou verre, une résine de renfort polymère (38) et de la poudre de nitrure de bore (40).

2. Panneau sandwich selon la revendication 1, **caractérisé en ce que** la résine (38) de renfort comprend de la poudre de nitrure de bore (40).

3. Panneau sandwich selon l'une des revendications 1 ou 2, **caractérisé en ce que** une résine de collage (43) utilisée dans la fabrication de l'âme alvéolaire pour coller des voiles (45, 56) de renfort (37) les uns sur les autres comprend de la poudre de nitrure de bore (40).

4. Panneau sandwich selon l'une des revendications 1 à 3, **caractérisé en ce que** des films (33A) et (33B) adhésifs entre les peaux (26, 28) et l'âme (24) contiennent de la poudre (40) de nitrure de bore.

5. Panneau sandwich selon l'une des revendications 1 à 4, **caractérisé en ce que** les alvéoles (32) pour au moins une partie de celles-ci sont remplies au moins partiellement d'un matériau (62) de remplissage contenant de la poudre (40) de nitrure de bore.

6. Panneau sandwich selon l'une des revendications 1 à 5, **caractérisé en ce que** la poudre de nitrure de bore (40) est une poudre de nitrure de bore hexagonale.

7. Panneau sandwich selon l'une des revendications 1 à 6, **caractérisé en ce que** le renfort (37) est un papier réalisé à partir de fibres méta-aramide.

8. Panneau sandwich selon l'une des revendications 1 à 7, **caractérisé en ce qu'**une peau (26, 28) est perforée.

9. Ensemble propulsif comprenant une nacelle (8) présentant une structure fixe interne (16) **caractérisé en ce que** la structure fixe (16) interne comprend un panneau sandwich (22) selon l'une des revendications 1 à 8.

10. Aéronef **caractérisé en ce qu'**il comprend une partie munie d'un panneau sandwich (22) selon l'une des revendications 1 à 8.

11. Procédé de fabrication d'un panneau sandwich (22) d'aéronef comprenant une première peau (26) et une deuxième peau (28) entre lesquelles se trouve une âme alvéolaire (24) comportant des alvéoles (32) débouchant de part et d'autre respectivement sur la première peau (26) et sur la deuxième peau (28), les alvéoles étant séparées les unes des autres par des parois latérales (34), **caractérisé en ce qu'**il comprend les étapes suivantes : - empilement de voiles (45, 56) de renfort à base de fibres aramide, carbone ou verre de manière à être associées les unes aux autres pour former un bloc (51) présentant des alvéoles ; - introduction d'une poudre de nitrure de bore (40) dans au moins une partie des parois latérales (34) desdites alvéoles comprenant une résine de renfort (38) - découpe d'âme (24) à la dimension souhaitée.

12. Procédé de fabrication selon la revendication 11, **caractérisé en ce que** la poudre de nitrure de bore (40) est mélangée à la résine (38) de renfort polymère avant d'être déposé sur le renfort (37) en plongeant le bloc (51) dans un bain de résine de renfort.

13. Procédé de fabrication selon l'une des revendications 11 ou 12, **caractérisé en ce que** la poudre (40) de nitrure de bore est mélangée à une résine (43) de collage appliquée en lignes parallèles sur les voiles de renfort pour les fixer les unes aux autres pour former le bloc (51) par expansion.

14. Procédé de fabrication selon la revendication 11, **caractérisé en ce que** la poudre de nitrure de bore (40) est intégrée à un renfort (36) complexe au niveau duquel une résine de renfort (38) est intégrée.

15. Procédé de fabrication selon l'une des revendications 11 à 14, **caractérisé en ce que** la poudre de nitrure de bore (40) est mélangée à des films adhésifs (33A) et (33B) intercalés entre l'âme (24) découpée et deux peaux (26, 28).

16. Procédé de fabrication selon l'une des revendications 11 à 14, **caractérisé en ce que** au moins une partie des alvéoles (32) est au moins partiellement remplie d'un matériau de remplissage (62) contenant de la poudre de nitrure de bore (40).

## Patentansprüche

1. Sandwichpaneel (22) für ein Flugzeug, umfassend eine erste Haut (26) und eine zweite Haut (28), zwischen denen sich ein Wabenkern (24) befindet, der Waben (32) beinhaltet, die beidseits an der ersten Haut (26) beziehungsweise an der zweiten Haut (28) münden, wobei die Waben voneinander durch seitliche Wände (34) getrennt sind, **dadurch gekennzeichnet, dass** die seitlichen Wände (34) des Kerns (24) eine Verstärkung (37) auf Basis von Aramid-, Carbon- oder Glasfasern, ein polymeres Verstärkungsharz (38) und Bornitridpulver (40) umfassen.

2. Sandwichpaneel nach Anspruch 1, **dadurch gekennzeichnet, dass** das Verstärkungsharz (38) Bornitridpulver (40) umfasst.

3. Sandwichpaneel nach einem der Ansprüche 1 oder 2, **dadurch gekennzeichnet, dass** ein Klebeharz (43), das bei der Herstellung des Wabenkerns verwendet wird, um Lagen (45, 56) einer Verstärkung (37) aufeinander zu kleben, Bornitridpulver (40) umfasst.

4. Sandwichpaneel nach einem der Ansprüche 1 bis 3, **dadurch gekennzeichnet, dass** Klebstofffilme (33A) und (33B) zwischen den Häuten (26, 28) und dem Kern (24) Bornitridpulver (40) enthalten.

5. Sandwichpaneel nach einem der Ansprüche 1 bis 4, **dadurch gekennzeichnet, dass** die Waben (32) zu mindestens einem Teil von ihnen mindestens teilweise mit einem Füllmaterial (62) gefüllt sind, das Bornitridpulver (40) enthält.

6. Sandwichpaneel nach einem der Ansprüche 1 bis 5, **dadurch gekennzeichnet, dass** das Bornitridpulver (40) ein sechseckiges Bornitridpulver ist.

7. Sandwichpaneel nach einem der Ansprüche 1 bis 6, **dadurch gekennzeichnet, dass** die Verstärkung (37) ein Papier ist, das aus Meta-Aramidfasern ausgeführt ist.

8. Sandwichpaneel nach einem der Ansprüche 1 bis 7, **dadurch gekennzeichnet, dass** eine Haut (26, 28) perforiert ist.

9. Triebwerksanordnung, umfassend eine Gondel (8), die eine innere feststehende Struktur (16) aufweist, **dadurch gekennzeichnet, dass** die innere feststehende Struktur (16) ein Sandwichpaneel (22) nach einem der Ansprüche 1 bis 8 umfasst.

10. Flugzeug, **dadurch gekennzeichnet, dass** es einen Teil umfasst, der mit einem Sandwichpaneel (22) nach einem der Ansprüche 1 bis 8 versehen ist.

11. Verfahren zur Herstellung eines Sandwichpaneels (22) für ein Flugzeug, umfassend eine erste Haut (26) und eine zweite Haut (28), zwischen denen sich ein Wabenkern (24) befindet, der Waben (32) beinhaltet, die beidseits an der ersten Haut (26) beziehungsweise an der zweiten Haut (28) münden, wobei die Waben voneinander durch seitliche Wände (34) getrennt sind, **dadurch gekennzeichnet, dass** es die folgenden Schritte umfasst: - Stapeln von Lagen (45, 56) einer Verstärkung auf Basis von Aramid-, Carbon- oder Glasfasern, so dass sie miteinander verbunden werden, um einen Block (51) zu bilden, der Waben aufweist; - Einführen eines Bornitridpulvers (40) in mindestens einen Teil der Seitenwände (34) der Waben, die ein Verstärkungsharz (38) umfassen - Zuschneiden des Kerns (24) auf das gewünschte Maß.

12. Verfahren zur Herstellung nach Anspruch 11, **dadurch gekennzeichnet, dass** das Bornitridpulver (40) mit dem polymeren Verstärkungsharz (38) gemischt wird, bevor es auf die Verstärkung (37) aufgebracht wird, indem der Block (51) in ein Verstärkungsharzbad getaucht wird.

13. Verfahren zur Herstellung nach einem der Ansprüche 11 oder 12, **dadurch gekennzeichnet, dass** das Bornitridpulver (40) mit einem Klebeharz (43) gemischt wird, das in parallelen Linien auf die Verstärkungslagen appliziert wird, um sie aneinander zu fixieren, um durch Ausdehnung den Block (51) zu bilden.

14. Verfahren zur Herstellung nach Anspruch 11, **dadurch gekennzeichnet, dass** das Bornitridpulver (40) in eine komplexe Verstärkung (36) integriert ist, in die ein Verstärkungsharz (38) integriert ist.

15. Verfahren zur Herstellung nach einem der Ansprüche 11 bis 14, **dadurch gekennzeichnet, dass** das Bornitridpulver (40) mit Klebstofffilmen (33A) und (33B) gemischt ist, die zwischen dem zugeschnittenen Kern (24) und zwei Häuten (26, 28) angeordnet sind.

16. Verfahren zur Herstellung nach einem der Ansprüche 11 bis 14, **dadurch gekennzeichnet, dass** mindestens ein Teil der Waben (32) mindestens teilweise mit einem Füllmaterial (62) gefüllt ist, das Bornitridpulver (40) enthält.

## Claims

1. Aircraft sandwich panel (22) comprising a first skin (26) and a second skin (28) between which is positioned a cellular core (24) comprising cells (32) opening out on both sides respectively in the first skin (26) and in the second skin (28), the cells being separated from one another by side walls (34), **characterized in that** the side walls (34) of the core (24) comprise an aramid-, carbon- or glass-fibre-based reinforcement (37), a polymeric reinforcing resin (38) and boron nitride powder (40) .

2. Sandwich panel according to Claim 1, **characterized in that** the reinforcing resin (38) comprises boron nitride powder (40).

3. Sandwich panel according to one of Claims 1 or 2, **characterized in that** a bonding resin (43) used in the manufacture of the cellular core to bond the layers (45, 56) of the reinforcement (37) to each other comprises boron nitride powder (40).

4. Sandwich panel according to one of Claims 1 to 3, **characterized in that** adhesive films (33A) and (33B) between the skins (26, 28) and the core (24) contain boron nitride powder (40).

5. Sandwich panel according to one of Claims 1 to 4, **characterized in that** at least some of the cells (32) are at least partially filled with a filler material (62) containing boron nitride powder (40).

6. Sandwich panel according to one of Claims 1 to 5, **characterized in that** the boron nitride powder (40) is a hexagonal boron nitride powder.

7. Sandwich panel according to one of Claims 1 to 6, **characterized in that** the reinforcement (37) is a sheet made from meta-aramid fibres.

8. Sandwich panel according to one of Claims 1 to 7, **characterized in that** one skin (26, 28) is perforated.

9. Propulsion unit comprising a nacelle (8) having an inner fixed structure (16), **characterized in that** the inner fixed structure (16) comprises a sandwich panel (22) according to one of Claims 1 to 8.

10. Aircraft **characterized in that** it comprises a portion provided with a sandwich panel (22) according to one of Claims 1 to 8.

11. Manufacturing method for an aircraft sandwich panel (22) comprising a first skin (26) and a second skin (28) between which is positioned a cellular core (24) comprising cells (32) opening out on both sides respectively in the first skin (26) and in the second skin (28), the cells being separated from one another by side walls (34), **characterized in that** it includes the following steps: - stacking layers (45, 56) of aramid-, carbon- or glass-fibre-based reinforcement such that said layers together form a block (51) containing cells, - adding boron nitride powder (40) to at least some of the side walls (34) of said cells including a reinforcing resin (38), - cutting the core (24) to the desired size.

12. Manufacturing method according to Claim 11, **characterized in that** the boron nitride powder (40) is mixed with the polymeric reinforcing resin (38) before being deposited on the reinforcement (37) by immersing the block (51) in a bath of reinforcing resin.

13. Manufacturing method according to one of Claims 11 or 12, **characterized in that** the boron nitride powder (40) is mixed with a bonding resin (43) applied in parallel lines to the reinforcing layers to fasten said layers together to form the block (51) by expansion.

14. Manufacturing method according to Claim 11, **characterized in that** the boron nitride powder (40) is incorporated into a complex reinforcement (36) to which a reinforcing resin (38) is added.

15. Manufacturing method according to one of Claims 11 to 14, **characterized in that** the boron nitride powder (40) is mixed with adhesive films (33A) and (33B) interposed between the cut core (24) and two skins (26, 28) .

16. Manufacturing method according to one of Claims 11 to 14, **characterized in that** at least some of the cells (32) are at least partially filled with a filler material (62) containing boron nitride powder (40).
